# EUROPÄISCHE PATENTANMELDUNG

(11) **EP 1 498 249 A1**
(43) Veröffentlichungstag der Anmeldung: **19.01.2005**
(21) Anmeldenummer: 04010271.7
(22) Anmeldetag: 30.04.2004
(51) Int. Cl.: B29C 43/24, B29D 31/00, B29C 63/04

(54) **Verfahren und Apparat zur Beschichtung von Walzen**

(30) Priorität: 18.07.2003 DE 10333046
(71) Anmelder: Mitex Gummifabrik Hans Knott GmbH, 40699 Erkrath (DE)
(72) Erfinder: Heinen, Georg, 40699 Erkrath (DE)
(74) Vertreter: Vonnemann, Gerhard, Dr.-Ing.

(57) **Zusammenfassung**

Die Erfindung betrifft einen Apparat und ein Verfahren zur Beschichtung von zylindrischen oder konischen Körpern, insbesondere von Walzen. Es ist Aufgabe der vorliegenden Erfindung, einen Apparat und ein Verfahren zur Beschichtung von Körpern, insbesondere von Walzen, vorzuschlagen, deren Beschichtung ähnlich homogen aufgebaut ist, wie die in Handkonfektion gefertigter Walzen und daher wie diese gleichmäßig quellen. Diese Aufgabe wird durch einen Apparat gelöst bei dem mindestens ein Kalander (4) zur Herstellung und Glättung einer Körperbeschichtungsbahn (7) aus einer, vorzugsweise temperierten, Beschichtungsmasse (1) vorgesehen ist und dass dem Kalander (4), insbesondere in räumlicher Nähe, ein rotierbarer, zu beschichtender Körper (5) zugeordnet ist.

## Beschreibung

Die Erfindung betrifft einen Apparat und ein Verfahren zur Beschichtung von zylindrischen oder konischen Körpem, insbesondere von Walzen. In nahezu den allermeisten Fällen kommen dabei rotationssymmetrische Körper zum Einsatz.

Bisher werden Walzen mit Elastomeren und anderen Kunststoffen beschichtet, indem diese Materialien zu etwa ein bis zwei Millimeter dicken Bahnen kalandriert werden. Diese Bahnen werden dann mit großem Aufwand mehrfach um den Walzenkörper gelegt. Hierbei spricht man dann von der sogenannten Handkonfektion. Unter Umständen werden bei der Umwicklung des Walzenkörpers Haft- und/oder Korrosionsschutzmittel eingesetzt. Die Bahnen werden in geeigneter Weise fixiert und anschließend einer Wärmebehandlung, insbesondere einem Vulkanisations- und Aushärtungsprozess unterzogen.

Um den hohen Personalaufwand bei diesem traditionellen Verfahren zu reduzieren, sind in den vergangenen Jahrzehnten viele Verfahren entwickelt worden, um diesen Vorgang zu beschleunigen. Dabei werden auf unterschiedlichste Art und Weise schmale Streifen unterschiedlichen Querschnitts erzeugt, die dann um den Walzenkörper gewickelt werden. Dies kann zum Beispiel durch Extrudieren (US 3,975,126), durch Verwendung eines vorgefertigten Elastomerstreifens (DE 1729708, US 2,941,911, US 6,206,994), oder durch Ausziehen eines schmalen Gummistreifens (US 2,994,913) bewirkt werden. Diese vorgefertigten Profile werden dann in unterschiedlicher Weise um den Walzenkörper gewickelt.

Die genannten, automatisierten Verfahren können allerdings die traditionelle Handkonfektion in bestimmten Anwendungen nicht ersetzen.

Quillt zum Beispiel der Beschichtungsgummi sehr stark auf, so lassen sich die Fertigungsnähte als spiralige Spuren im gequollenen Gummi wiederfinden.

Es ist daher Aufgabe der vorliegenden Erfindung, einen Apparat und ein Verfahren zur Beschichtung von Körpern, insbesondere von Walzen, vorzuschlagen, deren Beschichtung ähnlich homogen aufgebaut ist, wie die in Handkonfektion gefertigter Walzen und daher wie diese gleichmäßig quellen.

Die der Erfindung zugrunde liegende Aufgabe wird durch einen Apparat zur Beschichtung von zylindrischen oder konischen Körpern, insbesondere von Walzen, gelöst, bei dem mindestens ein Kalander zur Herstellung und Glättung einer Körperbeschichtungsbahn aus einer temperierten Beschichtungsmasse vorgesehen ist, wobei dem Kalander, insbesondere in räumlicher Nähe, ein rotierbarer, zu beschichtender Körper zugeordnet ist. Als Antrieb für die Rotation des Kalanders und des zu beschichtenden Körpers kann beispielsweise ein Elektromotor vorgesehen sein. Bei der Beschichtungsmasse handelt es sich um ein Polymer, insbesondere ein Elastomer, oder um andere Kunststoffmassen. Die mittels eines oder mehrerer in Reihe geschalteter Kalander auf die notwendige Dicke gewalzte Körperbeschichtungsbahn wird quasi unmittelbar dem zu beschichtenden Körper zugeführt. Durch Rotation des zu beschichtenden Körpers wird die Beschichtung des Körpers auf die gewünschte Dicke gebracht. Durch die frisch, unmittelbar vor der eigentlichen Beschichtung, erzeugte Oberfläche wird eine besonders gute Bindung zwischen den Lagen erreicht. Der komplette Beschichtungsvorgang inklusive der Kalandrierung erfolgt also maschinell. Der Personalaufwand kann hierdurch erheblich reduziert werden.

Gemäß einer vorteilhaften Ausgestaltung der Erfindung ist vorgesehen, dass die Kalanderbreite mindestens der Breite des zu beschichtenden Teilstücks des Körpers entspricht. Hierdurch kann eine Körperbeschichtungsbahn hergestellt werden, die mindestens in etwa der Breite des zu beschichtenden Teilstücks des zu beschichtenden Körpers entspricht. Der Kalander muss so ausgelegt sein, dass die Herstellung einer Körperbeschichtungsbahn in einer Breite möglich ist, die der Breite des zu beschichtenden Teilstücks entspricht. Durch diese Maßnahme müssen nicht einzelne Streifen aufgewickelt werden, sondem es kann eine Bahn über die gesamte Breite des zu beschichtenden Teilstücks aufgebracht werden. Dadurch werden Fertigungsnähte vermieden, deren Aufquellen Spuren in der fertigen Beschichtung hinterlassen könnten. Wenn in dieser Anmeldung von einem zu beschichtenden Teilstück die Rede ist, so soll selbstverständlich auch der Fall mit eingeschlossen sein, dass der Körper über die gesamte Breite beschichtet werden soll. In diesem Fall entspricht das Teilstück der gesamten Körperbreite. Falls die gesamte Körperoberfläche beschichtet werden soll, so muss die Kalanderbreite mindestens der Breite des gesamten, zu beschichtenden Körpers entsprechen.

Gemäß einer vorteilhaften Ausgestaltung der Erfindung ist vorgesehen, dass dem zu beschichtenden Körper Mittel zum Andrücken der Körperbeschichtungsbahn auf dem zu beschichtenden Körper zugeordnet sind. Hierdurch können Lufteinschlüsse mit Vorteil vermieden werden. Mit Vorteil ist hierfür eine Andrückrolle vorgesehen, die die Körperbeschichtungsbahn gegen den zu beschichtenden Körper drückt.

Gemäß einer Weiterbildung der Erfindung ist mit Vorteil vorgesehen, dass zwischen Kalander und zu beschichtendem Körper Mittel zum Beschneiden der Körperbeschichtungsbahnbreite, insbesondere auf die Breite oder in etwa auf die Breite des zu beschichtenden Teilstücks des Körpers, vorgesehen sind. Diese Ausführungsform ist besonders dann von Vorteil, wenn der Kalander und damit die Kalanderwalzen breiter ausgebildet sind als das zu beschichtende Teilstück. Wird die Körperbeschichtungsbahn in etwa auf die Breite des zu beschichtenden Teilstücks beschnitten, so wird mit Vorteil das Risiko von unvollständig miteinander verbundenen Körperbeschichtungsbahnstreifen vermieden. Weiterhin entstehen keine Fertigungsnähte, die sich insbesondere als spiralige Spuren in der fertigen Beschichtung wiederfinden. Selbstverständlich kann beispielsweise auch vorgesehen werden, die Körperbeschichtungsbahnbreite beispielsweise auf die Hälfte oder ein Drittel der Breite des zu beschichtenden Teilstücks zu beschneiden. Am vorteilhaftesten ist es jedoch in jedem Fall, wenn die Breite der Körperbeschichtungsbahn der Breite des gesamten zu beschichtenden Teilstücks entspricht.

Eine besonders effektive Methode zum Beschneiden der Körperbeschichtungsbahnbreite ist dadurch gegeben, dass als Mittel zum Beschneiden der Körperbeschichtungsbahnbreite mindestens ein, insbesondere aber zwei beabstandete, mit einer Schneidwalze zusammenwirkende, rotierende Messer vorgesehen sind. Der Abstand der beiden rotierenden Messer entspricht dann mit Vorteil der Breite des zu beschichtenden Körpers.

Um ein Stocken des Beschichtungsprozesses oder gar ein Abreißen der Körperbeschichtungsbahn zu vermeiden, ist mit Vorteil zwischen Kalander und zu beschichtendem Körper, insbesondere in Transportrichtung hinter den Mitteln zum Beschneiden der Körperbeschichtungsbahnbreite, ein kontinuierlicher Beschichtungsbahnspeicher vorgesehen.

Mit Vorteil besteht dieser kontinuierliche Beschichtungsbahnspeicher aus mindestens zwei beabstandeten Speicherwalzen, wobei mindestens eine der Speicherwalzen relativ zu der anderen Speicherwalze bewegbar ist, um die Körperbeschichtungsbahn auf einer konstanten Spannung zu halten. Um eine konstante Spannung der Körperbeschichtungsbahn zu gewährleisten, ist mit Vorteil zumindest eine der beiden Walzen gegen die Kraft einer Feder beweglich gelagert. Es kann jedoch auch ein Spannungsmesssensor vorgesehen sein, der über eine Steuerelektronik die Lage der Walzen zueinander steuert. Durch die Vorspannung der Walzen wird unter anderem gewährleistet, dass es nicht zu Lufteinschlüssen in der Beschichtung oder zu Wellungen der Körperbeschichtungsbahn auf dem zu beschichtenden Körper kommt.

Um ein Durchhängen der Körperbeschichtungsbahn zwischen Kalander und zu beschichtendem Körper zu vermeiden, ist mit Vorteil ein Förderband für den nahezu befastungsfreien Transport der Körperbeschichtungsbahn vorgesehen.

Es ist von besonders großem Vorteil, dass Mittel zur Rückführung der Schneidabfälle in den Kalander beziehungsweise in einen Beschichtungsmassenvorratsbehälter vor dem Kalander vorgesehen sind. Der abgeschnittene, überschüssige Teil kann so dem Prozess wieder zugeführt werden, was bei der Handkonfektion aufgrund des zeitlichen Abstandes zwischen Kalandrierung und Walzenbeschichtung nicht möglich war.

Gemäß einer vorteilhaften Ausgestaltung der Erfindung ist vorgesehen, dass die Kalanderwalzen beheizbar ausgebildet sind. Hierdurch kann der Kalandrierprozess optimiert und auf die unterschiedlichen Beschichtungsmaterialien angepasst werden. Mit Vorteil wird das Risiko von unvollständig miteinander verbundenen Körperbeschichtungsbahnstreifen vermieden, da die Geschmeidigkeit und Konfektionsklebrigkeit der Beschichtungsmasse durch die Erhitzung zusätzlich verbessert wird. Natürlich können zusätzliche Heizmittel, insbesondere vor dem Kalander vorgesehen sein.

Die der Erfindung zugrunde liegende Aufgabe wird auch durch ein Verfahren zur Beschichtung von zylindrischen oder konischen Körpem, insbesondere von Walzen, gelöst, wobei zuerst eine Beschichtungsmasse mittels eines Kalanders auf die benötigte Dicke gewalzt und geglättet wird, und dann die entstehende Körperbeschichtungsbahn einem zu beschichtendem, insbesondere rotierenden, Körper, unmittelbar zugeführt und dieser dann kontinuierlich beschichtet wird. Unmittelbare Zuführung beinhaltet selbstverständlich, dass in den Prozess Führungswalzen, Förderbänder oder Zwischenspeicher, etc. integriert sind. Mit kontinuierlicher Beschichtung ist gemeint, dass die Körperbeschichtungsbahn in einer oder mehreren Lagen auf den zu beschichtenden Körper aufgewickelt wird.

Durch das vorgeschlagene Verfahren wird also gewährleistet, dass die Walze unmittelbar nach Kalandrierung der Körperbeschichtungsbahn mit dieser beschichtet wird. Hierbei kann der Personalaufwand erheblich reduziert werden.

Durch die Maßnahme, dass zur Kalandrierung der Körperbeschichtungsbahn ein Kalander verwendet wird, dessen Breite mindestens der Breite des zu beschichtenden Teilstücks des Körpers entspricht, wird gewährleistet, dass eine Körperbeschichtungsbahn hergestellt werden kann, die in etwa der Breite des zu beschichtenden Teilstücks, bzw. des zu beschichtenden Körpers entspricht. Hierdurch werden insbesondere Nahtstellen und sonstige Fehler in der fertigen Beschichtung vermieden. Ebenfalls wird das Risiko von unvollständig miteinander verbundenen Materialschichten minimiert.

Mit Vorteil wird die Breite der Körperbeschichtungsbahn exakt an das benötigte Maß angepasst, indem die Körperbeschichtungsbahn vor dem eigentlichen Beschichtungsvorgang beschnitten wird, insbesondere in etwa auf die Breite des zu beschichtenden Teilstücks des Körpers. Soll der gesamte Körper beschichtet werden, so wird die Körperbeschichtungsbahn in etwa auf Breite des Körpers beschnitten.

Mit Vorteil ist vorgesehen, dass die Beschichtungsmasse auf eine Temperatur oberhalb der Raumtemperatur temperiert wird. Hierdurch lassen sich auch bei Raumtemperatur trockene, nicht klebende Mischungen verarbeiten, da durch die Temperaturerhöhung der Beschichtungsmasse auch ihre Klebrigkeit erhöht wird. Durch die größere Geschmeidigkeit und Konfektionsklebrigkeit der warmen Beschichtungsmasse wird der Ausschuss durch eingeschlossene Luft und die Bildung von Lagentrennungen erheblich reduziert.

Je nach verwendetem Beschichtungsmaterial liegt die Temperatur der Beschichtungsmasse mit Vorteil etwa zwischen 40°C und 100°C.

Gemäß einer zweckmäßigen Weiterbildung der Erfindung ist vorgesehen, dass die Schneidreste dem Kalander bzw. einem Beschichtungsmassenvorratsbehälter erneut zugeführt werden. Dieses Recycling der Beschichtungsmasse, insbesondere der Gummimischung ist im Gegensatz zu allen bekannten Verfahren, insbesondere zur Handkonfektion möglich, da zusätzliche Verfahrensschritte, die beim separaten kalandrieren auftreten, bei dem erfindungsgemäßen Verfahren wegfallen.

Um einen kontinuierlichen Beschichtungsvorgang zu ermöglichen, ist mit Vorteil vorgesehen, dass die Körperbeschichtungsbahn in einem kontinuierlichen Speicher vor dem Beschichtungsvorgang zwischengespeichert wird.

Um ein Produkt gleichbleibender Qualität und möglichst ohne Lufteinschlüsse zu erhalten, ist mit Vorteil vorgesehen, dass die Körperbeschichtungsbahn, insbesondere in einem kontinuierlichen Zwischenspeicher, vor dem Beschichtungsvorgang, insbesondere mit einer konstanten Vorspannung, vorgespannt wird.

An Hand einer Zeichnung, die ein Ausführungsbeispiel der Erfindung darstellt, wird die Erfindung im Detail erläutert.

Es zeigt:

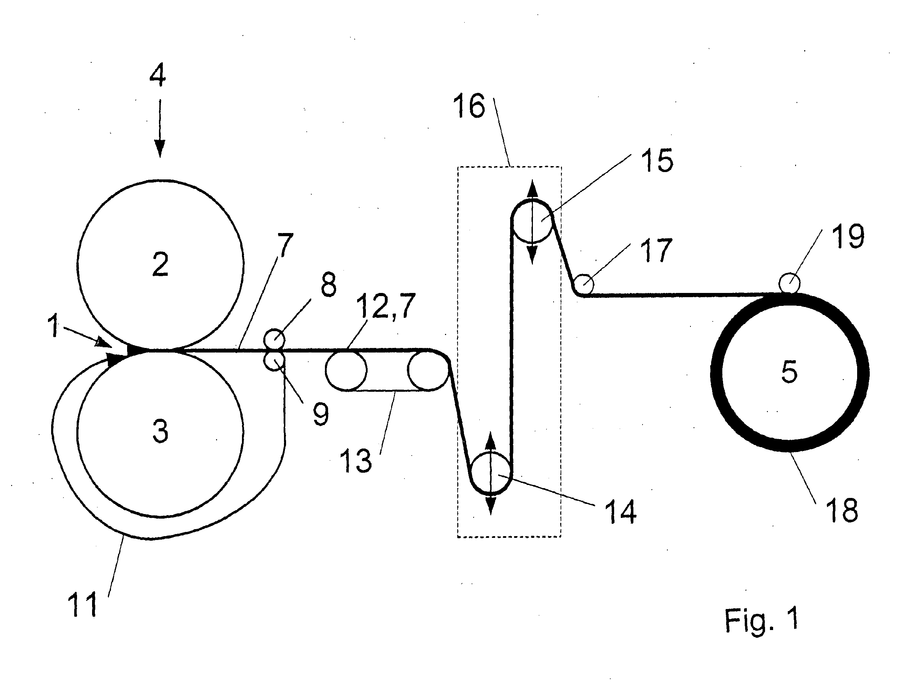

- Fig. 1:: eine schematische Darstellung des Apparates und des Verfahrens und
- Fig. 2:: eine Draufsicht auf die Schneidmittel.

Die temperierte Beschichtungsmasse 1, insbesondere eine Polymermasse, in diesem Anwendungsfall eine Gummimasse, wird durch zwei Kalanderwalzen eines Kalanders 4 auf eine Dicke zwischen etwa 0,5 und 2 mm gebracht und geglättet. Dabei ist die Breite des Kalanders 4 und der damit der Kalanderwalzen 2 und 3 größer bemessen als die Breite des zu beschichtenden Teilstücks des Körpers 5, hier einer Walze. Dabei sind in diesem Ausführungsbeispiel beide Kalanderwalzen beheizbar ausgebildet. Anschließend wird die Breite 6 der Körperbeschichtungsbahn 7 durch zwei rotierende, beabstandete Messer 8, die gegen eine Schneidwalze 9 laufen, festgelegt. In diesem Ausführungsbeispiel entspricht die Breite 6 der Körperbeschichtungsbahn in etwa der Breite des zu beschichtenden Körpers 5, da der Körper über seine gesamte Breite beschichtet werden soll. Der überschüssige Teil der Beschichtungsmasse 10 wird wieder zurück 11 zwischen die Kalanderwalzen 2, 3 befördert. Der restliche Teil 12 der Körperbeschichtungsbahn 7 wird über ein Förderband 13 in den in diesem Ausführungsbeispiel aus zwei Walzen 14, 15 gebildeten, kontinuierlichen Zwischenspeicher 16 gefördert. Beide Walzen 14, 15 sind relativ zueinander, gegen die Kraft von nicht gezeigten Federn, beweglich angeordnet. Hierdurch wird die Körperbeschichtungsbahn 12, 7 auf einer konstanten Spannung gehalten. Vom Zwischenspeicher 16 gelangt die Körperbeschichtungsbahn 12, 7 über eine Umlenkrolle 17 zur Walze 5 und wird auf diese aufgezogen. Die Walze 5 ist rotierbar gelagert. Selbstverständlich sind auch Antriebsmittel für die Walze 5 vorgesehen, die jedoch aus Übersichtlichkeitsgründen nicht dargestellt wurden. Die gewünschte Beschichtungsdicke der Walze 5 wird durch entsprechende häufige Rotation der Walze 5 erreicht.

Um Lufteinschlüsse in der Beschichtung 18 zu vermeiden, ist eine Andrückrolle 19 vorgesehen, die die Körperbeschichtungsbahn 12, 7 gegen die Walze drückt.

Die mittels des hier beschriebenen Verfahrens beschichtete Walze weist eine Breite von 1 m, einen Durchmesser von 150 mm und eine Beschichtung von 15 mm auf. Die Temperatur der verwendeten Gummimischung betrug 70°C und hatte nach dem Kalandrierprozess eine Dicke von 1 mm. Die Beschichtung fand bei einer Geschwindigkeit von 9 m/min statt.

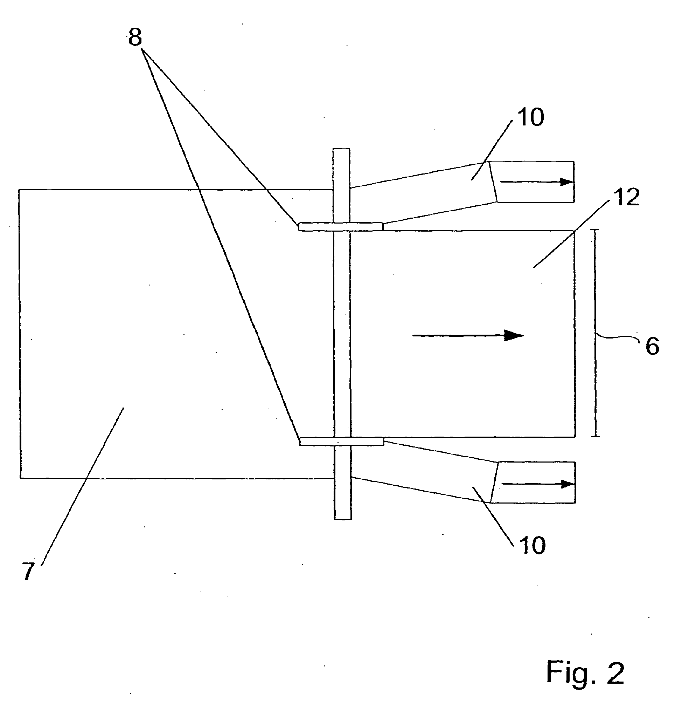

In Figur 2 ist eine Draufsicht auf die rotierenden Messer 8 dargestellt. In dieser Ansicht ist die Schneidwalze 9 nicht zu sehen, da diese sich unterhalb der Körperbeschichtungsbahn 7 befindet. Die Körperbeschichtungsbahn 7 wird auf eine Breite 6 beschnitten, die der Breite der zu beschichtenden Walze 5 entspricht. Der entstehende Abfall 10 wird im Kalandrierprozess erneut zugeführt.

### BEZUGSZEICHENLISTE

- 1.: Beschichtungsmasse
- 2.: Kalanderwalze
- 3.: Kalanderwalze
- 4.: Kalander
- 5.: zu beschichtender Körper
- 6.: Breite der Körperbeschichtungsbahn
- 7.: Körperbeschichtungsbahn
- 8.: rotierende Messer
- 9.: Schneidwalze
- 10.: überschüssige Körperbeschichtungsbahn
- 11.: Rückführung
- 12.: restlicher Teil der Körperbeschichtungsbahn
- 13.: Förderband
- 14.: erste Walze des Zwischenspeichers
- 15.: zweite Walze des Zwischenspeichers
- 16.: kontinuierlicher Zwischenspeicher
- 17.: Umlenkrolle
- 18.: Beschichtung
- 19.: Andrückrolle

## Patentansprüche

1. Apparat zur Beschichtung von zylindrischen oder konischen Körpern, insbesondere von Walzen, **dadurch gekennzeichnet, dass** mindestens ein Kalander (4) zur Herstellung und Glättung einer Körperbeschichtungsbahn (7) aus einer, vorzugsweise temperierten, Beschichtungsmasse (1) vorgesehen ist und dass dem Kalander (4), insbesondere in räumlicher Nähe, ein rotierbarer, zu beschichtender Körper (5) zugeordnet ist.

2. Apparat nach Anspruch 1, **dadurch gekennzeichnet, dass** die Kalanderbreite mindestens der Breite des zu beschichtenden Teilstücks des Körpers (5) entspricht.

3. Apparat nach einem der vorhergehenden Ansprüche, **dadurch gekennzeichnet, dass** Mittel (19) zum Andrücken der Körperbeschichtungsbahn (7, 12) auf den zu beschichtenden Körper (5) vorgesehen sind.

4. Apparat nach einem der vorhergehenden Ansprüche, **dadurch gekennzeichnet, dass** zwischen Kalander (4) und zu beschichtendem Körper (5) Mittel (8, 9) zum Beschneiden der Körperbeschichtungsbahnbreite, insbesondere auf die Breite oder in etwa auf die Breite des zu beschichtenden Teilstücks des Körpers (5), vorgesehen sind.

5. Apparat nach Anspruch 4, **dadurch gekennzeichnet, dass** als Mittel (8, 9) zum Beschneiden der Körperbeschichtungsbahnbreite mindestens ein, insbesondere zwei beabstandete, mit einer Schneidwalze (9) zusammenwirkende, rotieren Messer (8) vorgesehen sind.

6. Apparat nach einem der vorhergehenden Ansprüche, **dadurch gekennzeichnet, dass** zwischen Kalander (4) und zu beschichtendem Körper (5), insbesondere hinter den Mitteln (8, 9) zum Beschneiden der Körperbeschichtungsbahnbreite, ein kontinuierlicher Körperbeschichtungsbahnspeicher (16) vorgesehen ist.

7. Apparat nach Anspruch 6, **dadurch gekennzeichnet, dass** der kontinuierliche Körperbeschichtungsbahnspeicher (16) aus mindestens zwei beabstandeten Speicherwalzen (14, 15) besteht, wobei mindestens eine der Speicherwalzen (14, 15) relativ zu der anderen Speicherwalze (15, 14) bewegbar ist, um die Körperbeschichtungsbahn (7, 12) auf einer konstanten Spannung zu halten.

8. Apparat nach einem der vorhergehenden Ansprüche, **dadurch gekennzeichnet, dass** zwischen Kalander (4) und zu beschichtendem Körper (5) ein Förderband (15) für den Transport der Körperbeschichtungsbahn (7, 12) vorgesehen ist.

9. Apparat nach einem der Ansprüche 4 bis 8, **dadurch gekennzeichnet, dass** Mittel zur Rückführung der Schneidabfälle in den Kalander bzw. in einen Beschichtungsmassenvorratsbehälter vorgesehen sind.

10. Apparat nach einem der vorhergehenden Ansprüche, **dadurch gekennzeichnet, dass** die Kalanderwalzen (2, 3) beheizbar ausgebildet sind.

11. Verfahren zur Beschichtung von zylindrischen oder konischen Körpern, insbesondere von Walzen, wobei zuerst eine Beschichtungsmasse mittels eines Kalanders auf die benötigte Dicke gewalzt und geglättet wird, **dadurch gekennzeichnet, dass** die entstehende Körperbeschichtungsbahn (7, 12) einem zu beschichtendem, insbesondere rotierenden, Körper (5) unmittelbar zugeführt und dieser dann mit dieser Körperbeschichtungsbahn (7, 12) kontinuierlich, beschichtet wird.

12. Verfahren nach Anspruch 11, **dadurch gekennzeichnet, dass** zur Kalandrierung der Körperbeschichtungsbahn (7, 12) ein Kalander (4) verwendet wird, dessen Breite mindestens der Breite des zu beschichtenden Teilstücks des Körpers (5) entspricht.

13. Verfahren nach einem der Ansprüche 11 bis 12, **dadurch gekennzeichnet, dass** die Breite der Körperbeschichtungsbahn (7, 12) vor dem eigentlichen Beschichtungsvorgang beschnitten wird, insbesondere in etwa auf Breite des zu beschichtenden Teilstücks des Körpers (5).

14. Verfahren nach einem der vorhergehenden Ansprüche, **dadurch gekennzeichnet, dass** die Beschichtungsmasse (1) auf eine Temperatur oberhalb der Raumtemperatur temperiert wird.

15. Verfahren nach Anspruch 14, **dadurch gekennzeichnet, dass** die Temperatur der Beschichtungsmasse (1) zwischen etwa 40°C und 100°C beträgt.

16. Verfahren nach Anspruch 13, **dadurch gekennzeichnet, dass** die Schneidreste (10) dem Kalander (4) bzw. einem Massevorratsbehälter erneut zugeführt werden.

17. Verfahren nach einem der Ansprüche 11 bis 16, **dadurch gekennzeichnet, dass** die Körperbeschichtungsbahn (7,12) in einem kontinuierlichen Zwischenspeicher (16) vor dem Beschichtungsvorgang zwischengespeichert wird.

18. Verfahren nach einem der Ansprüche 11 bis 17, **dadurch gekennzeichnet, dass** die Körperbeschichtungsbahn (7, 12), insbesondere in einem kontinuierlichen Zwischenspeicher (16), vor dem Beschichtungsvorgang, insbesondere mit einer konstanten Vorspannung, vorgespannt wird.
